# EUROPÄISCHE PATENTSCHRIFT

(11) **EP 0 838 356 B1**
(45) Veröffentlichungstag und Bekanntmachung des Hinweises auf die Patenterteilung: **06.10.2004**
(21) Anmeldenummer: 97110235.5
(22) Anmeldetag: 23.06.1997
(51) Int. Cl.: B60H 1/00

(54) **Heiz- oder Klimaanlage**
Heating or air conditioning unit
Dispositif de chauffage ou de climatisation

(30) Priorität: 24.10.1996 DE 19644159
(43) Veröffentlichungstag der Anmeldung: 29.04.1998
(73) Patentinhaber: Behr GmbH & Co., 70469 Stuttgart (DE)
(72) Erfinder: Beck, Oliver, 71067 Sindelfingen-Hinterweil (DE); Berndt, Ralf, 71254 Ditzingen (DE); Denk, Walter, 71254 Ditzingen (DE); Drobner, Hans-Jürgen, 71229 Leonberg (DE); Fuchs, Manfred, 70195 Stuttgart (DE); Herbold, Gabriele, 71672 Marbach (DE); Putz, Ingo, 70195 Stuttgart (DE); Schork, Reinhold, 69412 Eberbach (DE); Spranger, Thomas, 70619 Stuttgart (DE); Ullrich, Walter, 71695 Möglingen (DE)

(56) Entgegenhaltungen:
- DE-A- 4 222 837
- DE-A- 4 442 000
- DE-C- 19 510 637

## Beschreibung

Die Erfindung betrifft eine Heiz- oder Klimaanlage nach dem Oberbegriff des Patentanspruchs 1.

Aus der **DE 44 42 000 A1** ist ein Einbaurahmen mit mehreren in demselben geführten Lamellen bekannt, der in eine Aufnahme des Gehäuses eingesetzt wird.

Aufgabe der vorliegenden Erfindung ist es, eine Heiz- oder Klimaanlage derart auszubilden, daß ein mit Lamellen versehener Einbaurahmen einfach und sicher in eine Aufnahme des Gehäuses eingesetzt und gehalten wird.

Zur Lösung der Aufgabe weist die Erfindung die Merkmale des Patentanspruchs 1 auf.

Dadurch, daß der Einbaurahmen an mindestens einer Rahmenseite eine Profilierung aufweist, die zu der Profilierung einer Aufnahme des Gehäuses korrespondiert, wird auf einfache Weise ein sicheres Einsetzen des Einbaurahmens in die Aufnahme gewährleistet. Ferner ermöglicht die Profilierung, daß im eingesetzten Zustand des Einbaurahmens die Klemmkräfte senkrecht zu der Rahmenseite wirken. Dies erhöht die Steifigkeit des Einbaurahmens, ohne daß störende Kräfte auf die in dem Einbaurahmen gehaltenen Lamellen wirken können. Es ist somit die Drehbarkeit der Lamellen unter geringem Kraftaufwand gewährleistet.

Erfindungsgemäß ist die Profilierung keilförmig ausgebildet, so daß am Beginn des Einsetzens lediglich die Erhebung des Einbaurahmens in eine korrespondierende Vertiefung der Aufnahme oder umgekehrt fluchtend angelegt wird und durch nachfolgende Relativbewegung derselben ein sicherer Sitz des Einbaurahmens in der Aufnahme erzielt wird.

Nach einer vorteilhaften Weiterbildung der Erfindung weist der Einbaurahmen an seinem vier Rahmenseiten Profilierungen auf, so daß er je nach Erfordernissen entweder quer oder längs in die Aufnahme des Gehäuses eingesetzt werden kann. Vorteilhaft sind die gegenüberliegenden Rahmenseiten mit zueinander komplementären Profilierungen versehen, so daß ein falsches Einsetzen des Einbaurahmens vermieden wird.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- **Fig. 1**: einen längsseitigen Teilschnitt des Gehäuses einer Klimaanlage mit in Aufnahmen eingesetzten Einbaurahmen, die zueinander sternförmig angeordnet sind,
- **Fig. 2**: eine perspektivische Darstellung eines Einbaurahmens,
- **Fig. 3**: eine erste Seitenansicht des Einbaurahmens,
- **Fig. 4**: eine zweite, gegenüberliegende Seitenansicht des Einbaurahmens,
- **Fig. 5**: ein randseitiger Teilbereich des Einbaurahmens in Vorderansicht,
- **Fig. 6**: eine Vorderansicht einer ersten Aufnahme und
- **Fig. 7**: eine Vorderansicht einer zweiten Aufnahme.

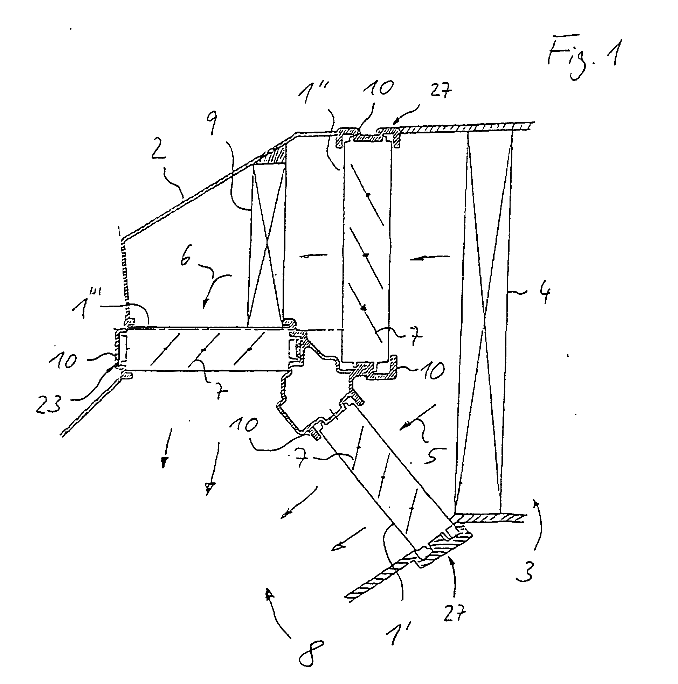

Der in **Fig. 1** dargestellte Teil-Längsschnitt einer Heizungs- oder Klimaanlage für ein Fahrzeug zeigt drei Einbaurahmen 1, die sternförmig innerhalb eines Gehäuses 2 der Heizungs- oder Klimaanlage angeordnet sind. Das Gehäuse 2 weist eine Einlaßöffnung 3 auf, durch die mit Hilfe eines nicht dargestellten Gebläses ein Luftstrom einströmt, einen Verdampfer 4 beaufschlagt und dann aufgeteilt wird in einen Kaltluftstrom 5 und einen Warmluftstrom 6, die jeweils in unterschiedlichen Kanälen geführt werden. In Abhängigkeit von der Stellung der als Lamellen 7 ausgebildeten Luftsteuerelementen der Einbaurahmen 1 werden entweder ein Kaltluftstrom 5 oder ein Warmluftstrom 6 oder beide zusammen einer Auslaßöffnung 8, die mit entsprechenden, zu dem Fahrzeuginnenraum führenden nicht dargestellten Düsen verbunden ist, zugeführt. Bei einer Öffnungsstellung der im Einbaurahmen 1' angeordneten Lamellen 7 wird ein Luftstrom als Kaltluftstrom 5 direkt zu der Auslaßöffnung 8 geführt. Bei einer Öffnungsstellung der im Einbaurahmen 1" und 1''' angeordnerten Lamellen 7 bildet sich der Warmluftstrom 6 aus, der durch einen zwischen den Einbaurahmen 1'' und 1''' angeordneten Heizkörper 9 erwärmt wird. Zur Sicherung der ortsfesten Lage der Einbaurahmen 1', 1'', 1''' weist das Gehäuse 2 Aufnahmen 10 auf, in denen jeweils der Einbaurahmen 1 formschlüssig gehalten ist.

Wie besonders gut aus **Fig. 2** ersichtlich ist, weist der Einbaurahmen 1 an seinen Rahmenseiten 11 eine profilierte Struktur auf. Eine erste Schmalseite 12 und eine erste Längsseite 13 des Einbaurahmens 1 weisen jeweils zwei zueinander sich keilförmig erstreckende Rippen 14 als Profilierung auf. Die keilförmige Ausbildung der Rippen 14 bewirkt, daß der Einbaurahmen 1 nur in eine Richtung in die korrespondierende Aufnahme 10 des Gehäuses 2 eingesetzt werden kann. Die Einschubrichtung des in Fig. 2 dargestellten Einbaurahmens kann beispielsweise von oben nach unten unter Anlage in der Aufnahme 10 erfolgen. Die profilierte Struktur der Längsseite 13 dient zum Einschieben des Einbaurahmens 1 in eine um 90° versetzte Einschiebrichtung, so daß je nach Gestaltung des Gehäuses 2 die Einbaurahmen 1 in zwei Einschubrichtungen in eine entsprechende Aufnahme 10 einsetzbar sind.

Der in **Fig. 2** dargestellte Einbaurahmen 1 ist im wesentlichen rechteckförmig ausgebildet. Im Inneren dieses Einbaurahmens 1 sind vorzugsweise drei Lamellen 7 angeordnet, die durch eine Öffnung 20 an den Schmalseiten 12 mit einem nicht dargestellten Stellorgan zur Verdrehung der Lamellen 7 verbunden sind. Das Stellorgan kann beispielsweise als Schrittmotor ausgebildet sein. Der in **Fig. 2** dargestellte Einbaurahmen 1 weist an jeder Rahmenseite 11 zwei keilförmig zueinander verlaufende Rippen 14 auf. Alternativ dazu kann die Rahmenseite 11 auch nur eine Rippe 14 aufweisen, die sich in einem spitzen Winkel zu der Längserstreckung der Rahmenseite 11 erstreckt. Die Rippen 14 weisen jeweils in einem mittleren Bereich 21 einen Überzug 22 aus einem elastischen Kunststoffmaterial, insbesondere aus einem Elastomer, auf. Dieser Überzug 22 dient zur Erhöhung der dichten Lagerung des Einbaurahmens 1 in der Aufnahme 10.

Wie in **Fig. 3** dargestellt ist, verlaufen die Rippen 14 im wesentlichen symmetrisch bezüglich einer Längsmittelebene 16 entlang der Schmalseite 12. Lediglich die rechte Rippe 14 ragt in einen oberen Eckbereich des Einbaurahmens 1 um eine Höhe h über die linke Rippe 14 hinaus. Der Höhenunterschied zwischen den beiden Rippen 14 besteht zumindest in einem Eckbereich des Einbaurahmens 1, so daß der Einbaurahmen 1 in den Eckbereichen codiert ist, so daß die seitenrichtige Lage des Einbaurahmens 1 beim Einschieben in die Aufnahme 10 schnell erkannt wird. Alternativ kann die Rippe 14 auch über die gesamte Länge der Rahmenseite 11 eine gleichbleibende, jedoch zu der benachbarten Rippe 14 unterschiedliche Höhe aufweisen.

**Fig. 3** und **Fig. 4** zeigen zwei gegenüberliegende Schmalseiten 12 des Einbaurahmens, wobei die Rippen 14 jeweils keilförmig zueinander verlaufen, jedoch einen unterschiedlichen Abstand zueinander aufweisen. Der Abstand zwischen den Rippen 14 ist gemäß der Schmalseite nach **Fig. 3** geringer, als der Abstand der Rippen 14 gemäß **Fig. 4.** Der unterschiedliche Abstand der Rippen 14 zueinander verhindert ein seitenverkehrtes Einschieben des Einbaurahmens 1 in die Aufnahme 10. Es wird dadurch gewährleistet, daß die in dem Einbaurahmen 1 gelagerten Lamellen 7 jeweils in die gleiche Richtung geöffnet oder verschlossen werden können. Der Winkel, den die beiden Rippen bilden, beträgt vorzugsweise 3°.

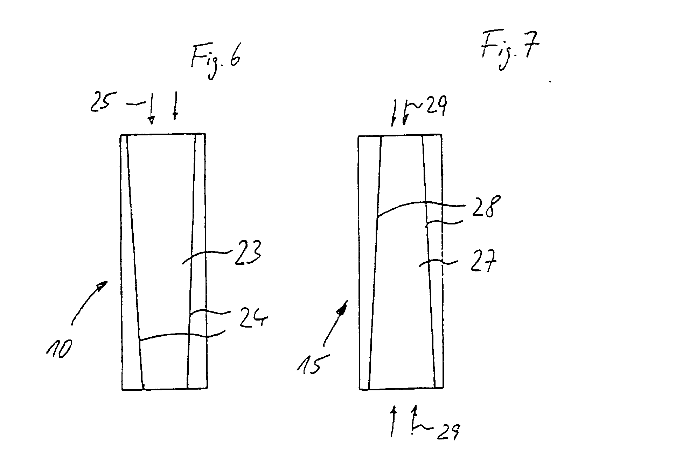

Nach einem ersten Ausführungsbeispiel der Aufnahme 10 gemäß **Fig. 6** weist die Aufnahme 10 eine mittlere Vertiefung 23 auf, deren Seitenflanken 24 in Einschubrichtung keilförmig zueinander laufen. Diese Ausbildung der Aufnahme kann beispielsweise der in **Fig. 4** dargestellten Schmalseite des Einbaurahmens 1 zugeordnet sein, wobei der Einbaurahmen 1 in Pfeilrichtung 25 unter Anlage der Außenseiten 26 der Rippen 14 in die Aufnahme 10 eingesetzt wird.

Nach einem weiteren Ausführungsbeispiel der Aufnahme 10 gemäß **Fig. 7** weist dieselbe eine mittlere Erhebung 27 mit keilförmig gegen die Einschubrichtung zusammenlaufenden Seitenflanken 28 auf. Diese Aufnahme 10 ist in der Lage, die gleiche Schmalseite des Einbaurahmens 1 wie die in **Fig. 6** dargestellte Aufnahme 10 klemmend zu halten. Zu diesem Zweck wird die in **Fig. 4** dargestellte Schmalseite 12 in Pfeilrichtung 29, also in umgekehrter Einschubrichtung, unter Anlage der Innenseiten 30 der Rippen 14 an den Seitenflanken 28 der Aufnahme 10 eingeschoben. Hierdurch wird insbesondere der Vorteil erzielt, daß bei Vorhandensein von zwei Gehäusehälften der Klimaanlage die Einbaurahmen 1 in die Aufnahmen 10 der Gehäusehälften seitenrichtig eingeführt werden können, wobei die Lamellen 7 die gleiche Orientierung aufweisen. Die Lamellen 7 öffnen daher über die gesamte Breite des Gehäuses in die gleiche Richtung. Die komplementäre Ausbildung der Aufnahmen 10 ermöglichen somit ein Einschieben des Einbaurahmens, ohne daß der Einbaurahmen 1 verdreht werden müßte. Er braucht lediglich in die entgegengesetzte Richtung eingeschoben werden.

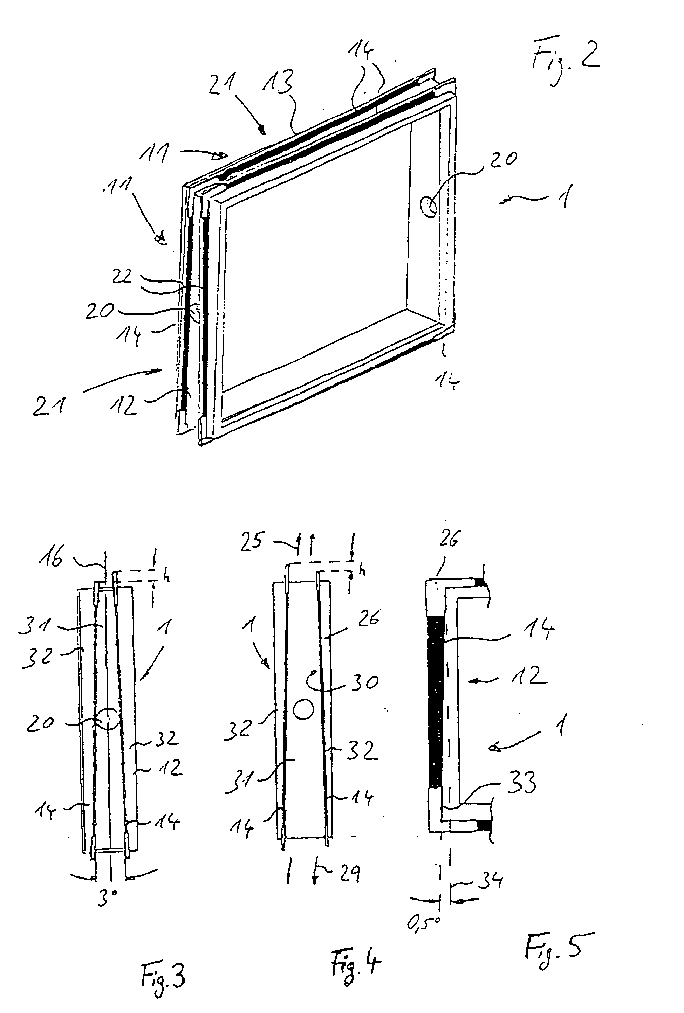

Zur Verbesserung des Einschiebevorgangs weisen sowohl eine innere Rahmenfläche 31 als auch äußere Rahmenflächen 32 der Rahmenseite 11 Schrägflächen 33 auf, deren Höhe in Einschubrichtung abnimmt. Wie aus **Fig. 5** zu ersehen ist, weist die äußere Rahmenfläche 32 eine Schrägfläche 33 auf, deren Höhe in Richtung der auseinanderlaufenden Rippen 14 zunimmt. Der Winkel bezüglich einer lotrechten Ebene 34 beträgt etwa 30'. Die Schrägfläche 33 der inneren Rahmenfläche 31 steigt in entgegengesetzter Richtung an. Die Höhe der Schrägflächen 33 nimmt nämlich in Richtung der auseinanderlaufenden Rippen 14 ab. Korrespondierend zum Verlauf der Rahmenflächen 31, 32 weisen die entsprechenden Seitenflanken 24, 28 eine in Einschubrichtung größere Höhe auf, so daß ein dichter und fester Sitz des Einbaurahmens 1 innerhalb der Aufnahme 10 gewährleistet ist.

Die Erfindung ist nicht auf die Ausbildung von jeweils zwei den Rahmenseiten zugeordneten Rippen beschränkt. Alternativ kann eine Rahmenseite auch nur eine Rippe aufweisen, die asymmetrisch verläuft. Auch die Profilierung von lediglich zwei Rahmenseiten kann zu einer sicheren Lagerung des Einbaurahmens innerhalb des Gehäuses ausreichen.

Eine Kodierung der Einbaurahmen 1 wird zusätzlich dadurch erzielt, daß jeweils eine Rippe 14 um eine Differenzhöhe h weiter abragt als eine zweite benachbarte Rippe 14.

## Patentansprüche

1. Heiz- oder Klimaanlage für den Innenraum eines Kraftfahrzeugs mit einem Gehäuse, mit mindestens einem Heizkörper und/oder einem Verdampfer, mit Ein- und Auslaßöffnungen und mit zwischen diesen angeordneten Kanälen sowie mit den Kanälen zugeordneten Luftsteuerelementen zum Schließen oder Öffnen der Kanäle, wobei das Luftsteuerelement aus einem Einbaurahmen mit mehreren im Rahmen geführten Lamellen besteht,
**dadurch gekennzeichnet, dass**
mindestens eine Rahmenseite (12, 13) des Einbaurahmens (1) eine Profilierung aufweist, derart, dass der Einbaurahmen (1) formschlüssig an einer korrespondierenden Aufnahme (10) des Gehäuses (2) gehalten ist, und die Profilierung mindestens eine schmale von der Rahmenseite (12, 13) hervorstehende Rippe (14) aufweist, die sich unter einem spitzen Winkel zu der Längsmittelebene (16) in Längsrichtung der Rahmenseite (12, 13) erstreckt.

2. Anlage nach Anspruch 1, **dadurch gekennzeichnet, dass** der spitze Winkel zwischen der hervorstehende Rippe (14) und der Längserstreckung der Rahmenseite (11) ausgebildet ist.

3. Anlage nach Anspruch 1 oder 2, **dadurch gekennzeichnet, dass** die Rippe (14) von der Rahmenseite (11) senkrecht und unter einem spitzen Winkel zur Längsmittelebene (16) hervorsteht.

4. Anlage nach einem der Ansprüche 1 bis 3, **dadurch gekennzeichnet, dass** die Profilierung des Einbaurahmens (1) zwei von der Rahmenseite (12, 13) hervorstehende Rippen (14) aufweist, die sich keilförmig in Längsrichtung der Rahmenseite (12, 13) erstrecken.

5. Anlage nach Anspruch 4, **dadurch gekennzeichnet, dass** die Rippen (14) bezüglich der Längsmittelebene (16) der Rahmenseite (12, 13) symmetrisch verlaufen.

6. Anlage nach einem oder mehreren der Ansprüche 1 bis 5, **dadurch gekennzeichnet, dass** die Aufnahme (10) eine zu der Profilierung des Einbaurahmens (1) korrespondierende Profilierung aufweist.

7. Anlage nach Anspruch 6, **dadurch gekennzeichnet, dass** die Aufnahme (10) eine mittlere Erhebung mit sich in Einschubrichtung keilförmig auseinanderlaufenden Seitenflanken aufweist, die derart voneinander beabstandet sind, dass die Rippen (14) des Einbaurahmens (1) in eingebautem Zustand mit ihren Innenseiten an den Seitenflanken anliegen.

8. Anlage nach Anspruch 6, **dadurch gekennzeichnet, dass** die Aufnahme (10) eine mittlere Vertiefung mit sich in Einschubrichtung keilförmig zueinanderlaufenden Seitenflanken aufweist, die derart voneinander beabstandet sind, dass die Rippen (14) im eingebauten Zustand mit ihren Außenseiten an den Seitenflanken anliegen.

9. Anlage nach einem oder mehreren der Ansprüche 1 bis 8, **dadurch gekennzeichnet, dass** der Einbaurahmen (1) an seinen vier Rahmenseiten (12, 13) mit einer Profilierung versehen ist, wobei die Profilierungen jeweils paralleler Schmalseiten (12) und Längsseiten (13) zueinander komplementär ausgebildet sind.

10. Anlage nach einem oder mehreren der Ansprüche 1 bis 9, **dadurch gekennzeichnet, dass** der Abstand zwischen zwei Rippen (14) einer ersten Rahmenseite sich mindestens von dem Abstand zwischen zwei Rippen (14) einer zweiten Rahmenseite unterscheidet.

11. Anlage nach einem oder mehreren der Ansprüche 1 bis 10, **dadurch gekennzeichnet, dass** mindestens eine die Rippe (14) angrenzende Rahmenfläche der Rahmenseite (12, 13) schräg zu einer lotrechten Ebene (34) als Schrägfläche (33) ausgebildet ist, wobei die Höhe der Schrägfläche (33) in Einschubrichtung abnimmt.

12. Anlage nach Anspruch 11, **dadurch gekennzeichnet, dass** die Rahmenseite (12, 13) eine innere Rahmenfläche aufweist mit einer Schrägfläche (33), die schräg zur lotrechten Ebene (34) ausgebildet ist und deren Höhe in Richtung der auseinanderlaufenden Rippen (14) abnimmt.

13. Anlage nach Anspruch 11 oder 12, **dadurch gekennzeichnet, dass** die Rahmenseite (12, 13) zwei äußere Rahmenflächen aufweist mit jeweils einer Schrägfläche (33), die schräg zur lotrechten Ebene (34) ausgebildet ist und deren Höhe in Richtung der auseinander laufenden Rippen (14) zunimmt.

14. Anlage nach einem der Ansprüche 11 bis 13, **dadurch gekennzeichnet, dass** die Schrägfläche (33) zur lotrechten Ebene (34) einen spitzen Winkel von ca. 30' bildet.

15. Anlage nach einem oder mehreren der Ansprüche 1 bis 14, **dadurch gekennzeichnet, dass** die Rippen 14 eine konstante Dicke aufweisen.

16. Anlage nach einem oder mehreren der Ansprüche 1 bis 15, **dadurch gekennzeichnet, dass** die Rippe 14 in einem mittleren Bereich mit einem elastischen Kunststoff, insbesondere einem Elastomer, umspritzt ist.

17. Anlage nach einem oder mehreren der Ansprüche 1 bis 16, **dadurch gekennzeichnet, dass** mindestens eine Rippe (14) in einem Eckbereich des Einbaurahmens (1) um eine Höhe (h) höher hervorsteht als eine zweite Rippe (14) in demselben Eckbereich.

## Claims

1. Heating or air-conditioning system for the interior of a motor vehicle, with a housing, at least one heating body and/or an evaporator with inlet and outlet orifices and ducts disposed between them, as well as air control elements cooperating with the ducts to close or open the ducts, the air control element consisting of a mounting frame with several fins guided in the frame,
**characterised in that**
at least one frame side (12, 13) of the mounting frame (1) has a region which is shaped so that the mounting frame (1) is positively retained on a complementary mount (10) of the housing (2), and the shaped region has at least one narrow rib (14) projecting out from the frame side (12, 13) which subtends an acute angle with the longitudinal mid-plane (16) in the longitudinal direction of the frame side (12, 13).

2. System as claimed in claim 1, **characterised in that** the acute angle is subtended by the projecting rib (14) and the longitudinal extension of the frame side (11).

3. System as claimed in claim 1 or 2, **characterised in that** the rib (14) projects out vertically from the frame side (11) and subtends an acute angle with the longitudinal mid-plane (16).

4. System as claimed in one of claims 1 to 3, **characterised in that** the shaped region of the mounting frame (1) has two (14) ribs projecting out from the frame side (12, 13) extending in a wedge shape in the longitudinal direction of the frame side (12, 13).

5. System as claimed in claim 4, **characterised in that** the ribs (14) extend symmetrically relative to the longitudinal mid-plane (16) of the frame side (12, 13).

6. System as claimed in one or more of claims 1 to 5, **characterised in that** the mount (10) has a shaped region matching the shaped region of the mounting frame (1).

7. System as claimed in claim 6, **characterised in that** the mount (10) has a central raised area with tapered side faces diverging in the insertion direction, which are spaced apart from one another so that the ribs (14) of the mounting frame (1) lie with their internal faces against the side faces in the mounted state.

8. System as claimed in claim 6, **characterised in that** the mount (10) has a central recess with tapered side faces converging in the insertion direction, which are spaced apart from one another so that the ribs (14) lie with their external faces against the side faces in the mounted state.

9. System as claimed in one or more of claims 1 to 8, **characterised in that** the mounting frame (1) has shaped regions on its four frame sides (12, 13), the shaped regions respectively forming parallel, mutually complementary short sides (12) and long sides (13).

10. System as claimed in one or more of claims 1 to 9, **characterised in that** the distance between two ribs (14) of a first frame side is different from at least the distance between two ribs (14) of a second frame side.

11. System as claimed in one or more of claims 1 to 10, **characterised in that** at least one frame surface of the frame side (12, 13) adjoining the rib (14) is an oblique surface (33) inclined relative to a vertical plane (34) and the height of the oblique surface (33) decreases in the insertion direction.

12. System as claimed in claim 11, **characterised in that** the frame side (12, 13) has an inner frame surface with an oblique surface (33) which is inclined relative to the vertical plane (34) and its height decreases in the direction of the diverging ribs (14).

13. System as claimed in claim 11 or 12, **characterised in that** the frame side (12, 13) has two outer frame surfaces, each with an oblique surface (33) which is inclined relative to the vertical plane (34) and its height increases in the direction of the diverging ribs (14).

14. System as claimed in one of claims 11 to 13, **characterised in that** the oblique surface (33) subtends an acute angle of approximately 30' with the vertical plane (34).

15. System as claimed in one or more of claims 1 to 14, **characterised in that** the ribs (14) have a constant thickness.

16. System as claimed in one or more of claims 1 to 15, **characterised in that** a central region of the rib (14) is sprayed with an elastic plastic material, in particular an elastomer.

17. System as claimed in one or more of claims 1 to 16, **characterised in that** at least one rib (14) in a corner region of the mounting frame (1) stands higher than a second rib (14) in the same corner region by a height (h).

## Revendications

1. Système de chauffage ou de climatisation pour l'habitacle d'un véhicule automobile, comprenant un carter, au moins un radiateur et/ou un évaporateur, des ouvertures d'entrée et de sortie et des conduites disposées entre ces ouvertures, ainsi que des éléments de commande d'air associés aux conduites pour la fermeture ou l'ouverture des conduites, où l'élément de commande d'air se compose d'un bâti encastré comportant plusieurs lamelles guidées dans le bâti,
**caractérisé en ce que**
au moins un côté (12, 13) du bâti encastré (1) présente un profil conçu de manière telle, que le bâti encastré (1) est tenu, par sûreté de forme, sur un logement correspondant (10) du carter (2), et le profil présente au moins une ailette étroite (14) faisant saillie par rapport au côté (12, 13) du bâti, laquelle ailette s'étend dans le sens longitudinal du côté (12, 13) du bâti, suivant un angle aigu par rapport au plan médian longitudinal (16).

2. Système selon la revendication 1, **caractérisé en ce que** l'angle aigu est formé entre l'ailette (14) faisant saillie et la dimension longitudinale du côté (11) du bâti.

3. Système selon la revendication 1 ou 2, **caractérisé en ce que** l'ailette (14) fait saillie verticalement par rapport au côté (11) du bâti, en formant un angle aigu par rapport au plan médian longitudinal (16).

4. Système selon l'une quelconque des revendications 1 à 3, **caractérisé en ce que** le profil du bâti encastré (1) présente deux ailettes (14) faisant saillie par rapport au côté (12, 13) du bâti, lesquelles ailettes s'étendent en forme de coin, dans le sens longitudinal du côté (12, 13) du bâti.

5. Système selon la revendication 4, **caractérisé en ce que** les ailettes (14) s'étendent symétriquement par rapport au plan médian longitudinal (16) du côté (12, 13) du bâti.

6. Système selon l'une quelconque ou plusieurs des revendications 1 à 5, **caractérisé en ce que** le logement (10) présente un profil correspondant au profil du bâti encastré (1).

7. Système selon la revendication 6, **caractérisé en ce que** le logement (10) présente une élévation centrale comportant des flancs latéraux s'écartant l'un de l'autre, en forme de coin, dans le sens de l'insertion, lesquels flancs latéraux sont espacés l'un de l'autre de manière telle, que les ailettes (14) du bâti encastré (1), une fois montées, sont en appui, par leurs côtés intérieurs, sur les flancs latéraux.

8. Système selon la revendication 6, **caractérisé en ce que** le logement (10) présente un creux central comportant des flancs latéraux convergeant l'un vers l'autre, en forme de coin, dans le sens de l'insertion, lesquels flancs latéraux sont espacés l'un de l'autre de manière telle, que les ailettes (14), une fois montées, sont en appui, par leurs côtés extérieurs, sur les flancs latéraux.

9. Système selon l'une quelconque ou plusieurs des revendications 1 à 8, **caractérisé en ce que** le bâti encastré (1) est doté sur les quatre côtés (12, 13) de son bâti, d'un profil, où les profils des petits côtés (12) et des grands côtés (13), à chaque fois parallèles, sont configurés en étant complémentaires les uns par rapport aux autres.

10. Système selon l'une quelconque ou plusieurs des revendications 1 à 9, **caractérisé en ce que** l'espacement entre deux ailettes (14) d'un premier côté du bâti se différencie au moins de l'espacement compris entre deux ailettes (14) d'un deuxième côté du bâti.

11. Système selon l'une quelconque ou plusieurs des revendications 1 à 10, **caractérisé en ce qu'**au moins une surface du côté (12, 13) du bâti, contiguë à l'ailette (14), est configurée comme une surface oblique (33) inclinée par rapport à un plan vertical (34), où la hauteur de la surface oblique (33) diminue dans le sens de l'insertion.

12. Système selon la revendication 11, **caractérisé en ce que** le côté (12, 13) du bâti présente une surface de bâti intérieure comprenant une surface oblique (33) qui est configurée en étant inclinée par rapport au plan vertical (34) et dont la hauteur diminue en direction des ailettes (14) s'écartant les unes des autres.

13. Système selon la revendication 11 ou 12, **caractérisé en ce que** le côté (12, 13) du bâti présente deux surfaces de bâti extérieures comportant à chaque fois une surface oblique (33) qui est configurée en étant inclinée par rapport au plan vertical (34) et dont la hauteur augmente en direction des ailettes (14) s'écartant les unes des autres.

14. Système selon l'une quelconque des revendications 11 à 13, **caractérisé en ce que** la surface oblique (33) forme un angle aigu à peu près égal à 30°, par rapport au plan vertical (34).

15. Système selon l'une quelconque ou plusieurs des revendications 1 à 14, **caractérisé en ce que** les ailettes (14) présentent une épaisseur constante.

16. Système selon l'une quelconque ou plusieurs des revendications 1 à 15, **caractérisé en ce que** l'ailette (14), dans une zone centrale, est extrudée en utilisant une matière plastique élastique, en particulier un élastomère.

17. Système selon l'une quelconque ou plusieurs des revendications 1 à 16, **caractérisé en ce qu'**au moins une ailette (14), dans une zone angulaire du bâti encastré (1), est plus haute qu'une deuxième ailette (14) dans la même zone angulaire, en dépassant d'une hauteur (h).
